# EUROPEAN PATENT APPLICATION

(11) **EP 2 214 352 A1**
(43) Date of publication of application: **04.08.2010**
(21) Application number: 09741679.6
(22) Date of filing: 15.04.2009
(51) Int. Cl.: H04L 12/46

(54) **LAYER TWO VIRTUAL PRIVATE NETWORK CROSS-DOMAIN IMPLEMENTATION (L2VPN) METHOD, SYSTEM AND DEVICE**

(30) Priority: 06.05.2008 CN 200810097220
(71) Applicant: Huawei Technologies Co., Ltd., Longgang District, Shenzhen Guangdong 518129 (CN)
(72) Inventor: LV, Hong, Shenzhen, 518129 (CN)
(74) Representative: Kreuz, Georg Maria
(86) International application number: PCT/CN2009/071284
(87) International publication number: WO 2009/135404

(57) **Abstract**

A method, a system, and an apparatus for implementing Layer 2 Virtual Private Network, L2VPN, between autonomous systems, ASs, are disclosed. The method includes: receiving a first L2VPN mapping packet from a first AS; parsing the first L2VPN mapping packet to obtain a first label carried in the first L2VPN mapping packet, applying for a second label which is different from the first label carried in the first L2VPN mapping packet, and generating a second L2VPN mapping packet according to the second label; and sending the second L2VPN mapping packet to a second AS. When multiple VPN users need to establish MPLS L2VPN between ASs, the MPLS L2VPN can be established between ASs through the technical solution under the present invention only if one link exists between the ASs, thus providing high extensibility, high security, and convenient management.

## Description

This application claims priority to Chinese Patent Application No. 200810097220.5, filed with the Chinese Patent Office on May 6, 2008 and entitled "Method, System and Apparatus for Implementing L2VPN Between Autonomous Systems", which is incorporated herein by reference in its entirety.

### Field of the Invention

The present invention relates to communication technologies, and in particular, to a method, a system, and an apparatus for implementing Layer 2 Virtual Private Network, L2VPN, between autonomous systems.

### Background of the Invention

A Virtual Private Network (VPN) is a virtual private communication network set up by an Internet Service Provider (ISP) or a Network Service Provider (NSP) on a public network. A Multi-Protocol Label Switching (MPLS) L2VPN provides L2VPN services based on an MPLS network so that a Service Provider (SP) can deploy L2VPN services on an MPLS network.

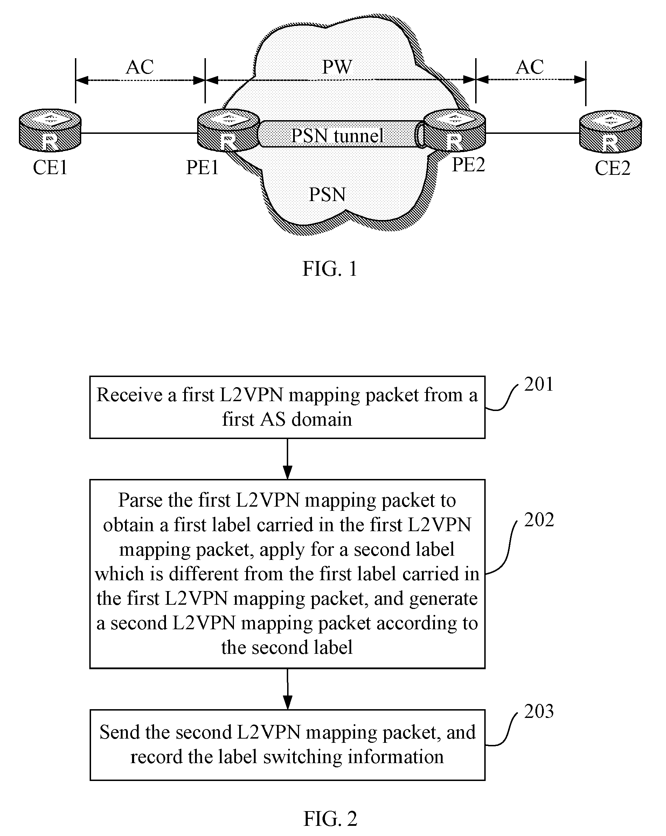

As shown in FIG. 1, the basic model of the MPLS L2VPN includes: Provider Edge (PE), Customer Edge (CE), Attachment Circuit (AC), Packet Switched Network (PSN) Tunnel, and Pseudo Wire (PW). The AC is a logical link between the CE and the PE. The PW is an encapsulated bearer channel on the PE, and is set up by a signaling protocol. A Virtual Circuit (VC) is identified by a VC identifier and type.

In the actual network application, multiple devices of one VPN user may access different Autonomous Systems, ASs, in different cities, and the ASs may belong to a single SP or different SPs. The VPN need to be interconnected between different ASs based on a VPN inter-AS solution.

Three solutions to implementing MPLS VPN between ASs are currently available: Option A, Option B, and Option C. In Option A, sub-interfaces need to be applied between different ASs, but only a limited number of sub-interfaces are supported by an Autonomous System Boundary Router (ASBR), and therefore, Option A is not well extensible. In Option B, MPLS forwarding is applied between different ASs, and the ASBR does not need to support sub-interfaces, and therefore, Option B is well extensible. Option C is seldom applied due to management inconvenience and lack of security.

The MPLS L2VPN is classified into two types: point-to-point VPN, and point-to-multipoint VPN. Currently, the Label Distribution Protocol (LDP) is used as a signaling protocol to transmit layer-2 information and VC labels. With LDP, only Option A and Option C can be applied to implement VPN between ASs.

It is assumed that CE1 and CE2 are users of VPN1, and that CE3 and CE4 are users of VPN2. If Option A is applied to implement MPLS VPN between ASs, an interface (generally, a sub-interface) needs to be allocated to a user of VPN1 and a user of VPN2 each on the ASBR, and the intra-AS PW is extended only to this sub-interface. L2VPN mapping packets and VC labels are forwarded between different ASBRs according to the sub-interface.

Option A has the following defects: A sub-interface needs to be allocated to each VPN user on the ASBR. Because some interfaces do not support sub-interfaces, and the number of interfaces that support sub-interfaces is limited, it is not convenient to add users massively, and thus the network is not well extensible. Moreover, too many sub-interfaces lead to management difficulty and slow startup of devices.

It is assumed that CE1 and CE2 are users of VPN1, and that CE3 and CE4 are users of VPN2. If Option C is applied to implement MPLS VPN between ASs, AS1 needs to learn the route in an AS2 and set up a tunnel to AS2; and AS2 needs to learn the route in an AS1 and set up a tunnel to AS1.

Option C has the following defects:
(1) The AS needs to learn the route in other ASs and set up a tunnel to other ASs, and the user needs to take the problems of management inconvenience and lack of security into consideration.
(2) More tunnels need to be set up in an AS. In addition to the tunnels set up according to the route in this AS, more tunnels need to be set up according to the route in other ASs.
(3) Users hardly accept Option C due to management inconvenience and lack of security.

Some SPs expect to use Option B to implement MPLS L2VPN between ASs, but the prior art does not support Option B to implement MPLS L2VPN.

### Summary of the Invention

The embodiments of the present invention provide a method, a system, and an apparatus for implementing L2VPN between ASs, and this method uses Option B to implement LDP-based MPLS L2VPN between ASs.

A method for implementing L2VPN between ASs is provided in an embodiment of the present invention. The method includes:
receiving a first L2VPN mapping packet from a first AS;
parsing the first L2VPN mapping packet to obtain a first label carried in the first L2VPN mapping packet, applying for a second label which is different from the first label carried in the first L2VPN mapping packet, and generating a second L2VPN mapping packet according to the second label; and
sending the second L2VPN mapping packet to a second AS.

A system for implementing L2VPN between ASs is provided in an embodiment of the present invention. The system includes:
a first PE, adapted to send a first L2VPN mapping packet;
a first ASBR, adapted to receive and parse the first L2VPN mapping packet sent by the first PE, obtain the label carried in the first L2VPN mapping packet, apply for a second label which is different from the first label carried in the first L2VPN mapping packet, generate a second L2VPN mapping packet according to the second label, and send the second L2VPN mapping packet, where the first PE and the first ASBR belong to a first AS;
a second ASBR, adapted to receive and parse the second L2VPN mapping packet sent by the first ASBR, obtain the second label carried in the second L2VPN mapping packet, apply for a third label which is different from the second label carried in the second L2VPN mapping packet, generate a third L2VPN mapping packet according to the third label, and send the third L2VPN mapping packet, where the second ASBR belongs to a second AS; and
a second PE, adapted to receive and parse the third L2VPN mapping packet sent by the second ASBR, obtain the third label, a VC identifier, and a VC type carried in the third L2VPN mapping packet, and establish an L2VPN according to the third label, the VC identifier and VC type carried in the third L2VPN mapping packet, where the second PE and the second ASBR belong to the second AS.

An ASBR is provided in an embodiment of the present invention. The ASBR includes:
a receiving module, adapted to receive a first L2VPN mapping packet;
a parsing module, adapted to parse the first L2VPN mapping packet received by the receiving module, and obtain a first label carried in the mapping packet;
a label applying module, adapted to apply for a second label which is different from the first label obtained by the parsing module;
a packet generating module, adapted to generate a second L2VPN mapping packet according to the second label applied for by the label applying module;
   and
a sending module, adapted to send the second L2VPN mapping packet generated by the packet generating module.

A PE is provided in an embodiment of the present invention. The PE includes:
a receiving module, adapted to receive an L2VPN mapping packet sent by an ASBR;
a parsing module, adapted to parse the L2VPN mapping packet received by the receiving module, and obtain the label, VC identifier and VC type carried in the L2VPN mapping packet; and
an L2VPN establishing module, adapted to establish an L2VPN according to the label, VC identifier and VC type carried in the L2VPN mapping packet obtained by the parsing module.

Compared with the prior art, the embodiments of the present invention bring about the following benefits: The ASBR receives and parses the L2VPN mapping packet from the first AS, obtains the first label carried in the mapping packet, applies for a second label which is different from the first label carried in the mapping packet, generates a second L2VPN mapping packet according to the second label, and sends the second L2VPN mapping packet to a second AS. In this way, when multiple VPN users need to establish MPLS L2VPN between ASs, the MPLS L2VPN can be established between ASs through the technical solution under the present invention only if one link exists between the ASs, without the need of learning the route in other ASs or establishing a tunnel according to the route in other ASs.

### Brief Description of the Drawings

FIG. 1 shows a basic model of an MPLS L2VPN in the prior art;
FIG. 2 is a flowchart of a method for implementing L2VPN between ASs according to an embodiment;
FIG. 3 is a signaling flowchart of a method for implementing L2VPN between ASs according to an embodiment;
FIG. 4 shows a networking structure according to an embodiment;
FIG. 5 is a signaling flowchart of a method for implementing L2VPN between ASs according to another embodiment;
FIG. 6 shows a networking structure according to another embodiment;
FIG. 7 shows a structure of a system for implementing L2VPN between ASs according to an embodiment;
FIG. 8 shows a structure of an ASBR according to an embodiment;
FIG. 9 shows a structure of a PE according to an embodiment; and
FIG. 10 shows a structure of a PE according to another embodiment.

### Detailed Description of the Embodiments

The embodiments of the present invention provide a method for implementing L2VPN between ASs, and this method uses Option B to implement LDP-based MPLS L2VPN between ASs. The present invention is detailed below with reference to accompanying drawings and exemplary embodiments.

FIG. 2 is a flowchart of a method for implementing L2VPN between ASs in an embodiment of the present invention. The method includes the following steps:
201. Receive a first L2VPN mapping packet. Before receiving the first L2VPN mapping report, an ASBR establishes an LDP remote session with another ASBR (namely, a second ASBR), and establishes a LDP remote session with a PE in an AS that covers the ASBR. The ASBR and the second ASBR belong to different SPs.
202. Parse the first L2VPN mapping packet to obtain a first label carried in the first L2VPN mapping packet, apply for a second label which is different from the first label carried in the first L2VPN mapping packet, and generate a second L2VPN mapping packet according to the second label.
203. Send the second L2VPN mapping packet, and record the label switching information.

After receiving the L2VPN mapping packet sent by the PE in the AS that covers the ASBR, the ASBR sends the generated second L2VPN mapping packet to the second ASBR. The ASBR and the second ASBR belong to different SPs. In this case, after the label switching information is recorded, the ASBR uses the second label as an ingress label and uses the first label carried in the first L2VPN mapping packet and the public network Label Switching Path (LSP) as an egress label to generate MPLS forwarding entries.

Alternatively, after receiving the first L2VPN mapping packet sent by the second ASBR, the ASBR sends the generated second L2VPN mapping packet to the PE which is in a remote session with the ASBR. In this case, after the label switching information is recorded, the ASBR uses the second label as an ingress label and uses the first label carried in the first L2VPN mapping packet as an egress label to generate MPLS forwarding entries.

After the generated second L2VPN mapping packet is sent to the PE which is in a remote session with the ASBR, the PE parses the second L2VPN mapping packet to obtain the label, a VC identifier, and a VC type carried in the second L2VPN mapping packet; and establishes an L2VPN according to the label, VC identifier and VC type carried in the second L2VPN mapping packet. An example is given below.

In a point-to-point VPN scenario, after the PE determines that an identical VC identifier and VC type exist in the PE according to the VC identifier and VC type, the PE obtains the IP address of the ASBR according to the remote session between the PE and the ASBR, searches for the public network LSP according to the IP address of the ASBR, and generates MPLS forwarding entries. The MPLS forwarding entries use the ingress label of the VPN user corresponding to the VC identifier and VC type as an index and use the label carried in the second L2VPN mapping packet and the public network LSP as an egress label.

In a point-to-multipoint VPN scenario, after the PE determines that an identical VC identifier and VC type exist in the PE according to the VC identifier and VC type, the PE obtains the IP address of the ASBR according to the remote session between the PE and the ASBR, searches for the public network LSP according to the IP address of the ASBR, and generates MPLS forwarding entries with the Media Access Control (MAC) address. The MPLS forwarding entries use the destination MAC address as an index and use the label carried in the second L2VPN mapping packet and the public network LSP as an egress label.

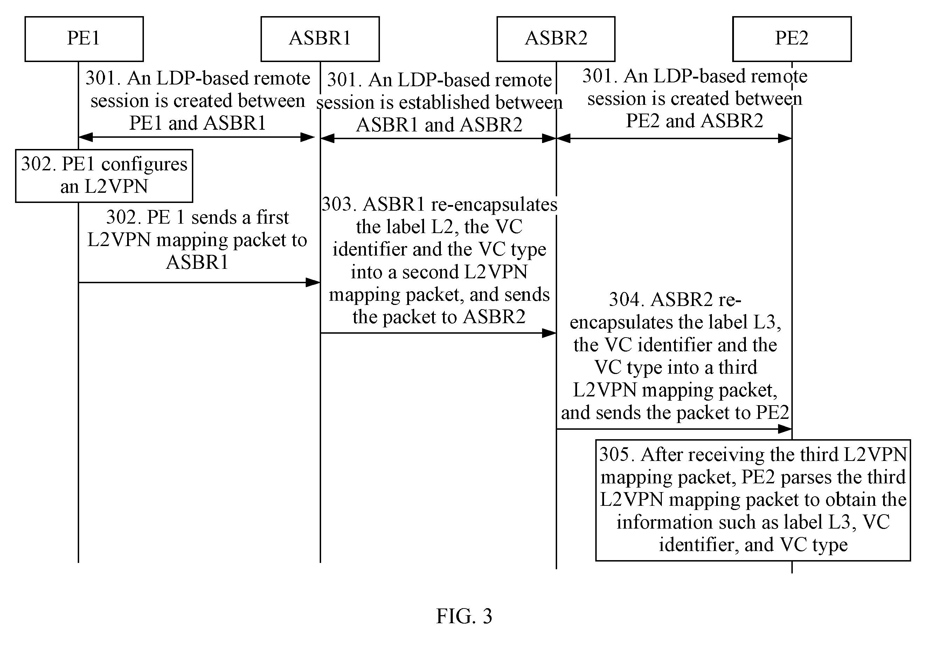

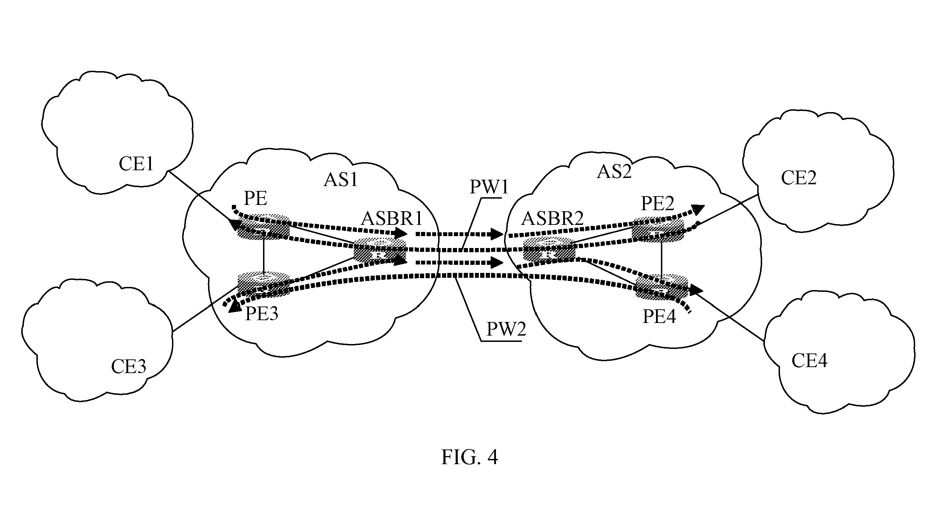

FIG. 3 is a signaling flowchart of a method for implementing L2VPN between ASs in the first embodiment of the present invention. The first embodiment deals with the method for establishing MPLS L2VPN between ASs in a point-to-point VPN scenario. FIG. 4 shows a networking structure of the first embodiment of the present invention. As shown in FIG. 4, a CE1 and a CE2 form VPN1, and a CE3 and a CE4 form VPN2. The first embodiment assumes that MPLS L2VPN is established between the CE 1 and the CE2. The method includes the following steps:
301. An LDP remote session is established between PE1 and ASBR1, an LDP remote session is established between ASBR1 and ASBR2, and an LDP remote session is established between ASBR2 and PE2.
302. After configuring the L2VPN, PE1 sends a first L2VPN mapping packet to ASBR1. The first L2VPN mapping packet carries the information such as VC identifier, VC type, and label L1.
303. After receiving the first L2VPN mapping packet, ASBR1 parses the packet to obtain label L1, obtains the IP address of PE1 according to the remote session, searches out the public network LSP, applies for a new label L2, and generates MPLS forwarding entries by using label L2 as an ingress label and using label L1 and the public network LSP as an egress label, and at the same time, re-encapsulates the information such as label L2, VC identifier and VC type into a second L2VPN mapping packet which is then sent to ASBR2.
304. After receiving the second L2VPN mapping packet, ASBR2 parses the second L2VPN mapping packet to obtain label L2, applies for a new label L3, and generates MPLS forwarding entries by using label L3 as an ingress label and using label L2 as an egress label, and at the same time, re-encapsulates the information such as label L3, VC identifier and VC type into a third L2VPN mapping packet which is then sent to PE2.
305. After receiving the third L2VPN mapping packet, PE2 parses the third L2VPN mapping packet to obtain the information such as label L3, VC identifier, and VC type. Afterward, according to the VC identifier and VC type, PE2 judges whether an identical VC identifier and an identical VC type exist in PE2. If an identical VC identifier and an identical VC type exist in PE2, PE2 obtains the IP address of ASBR2 according to the remote session, searches out the public network LSP according to the IP address of ASBR2, and generates MPLS forwarding entries by using the local VPN user ingress label as an index and using the label L3 and the public network LSP as an egress label. In this way, the PW is established between PE2 and PE1 successfully. PE2 transmits the traffic of CE2 to PE1 transparently through the PW, and PE1 sends the traffic to CE1.

In the reverse direction, the PW between PE1 and PE2 is established in the same way.

Another VPN2 user also uses the foregoing method to establish two PWs between PE3 and PE4. The VPN1 user and the VPN2 user share a link between ASBR1 and ASBR2, but the label of the VPN1 user is different from the label of the VPN2 user.

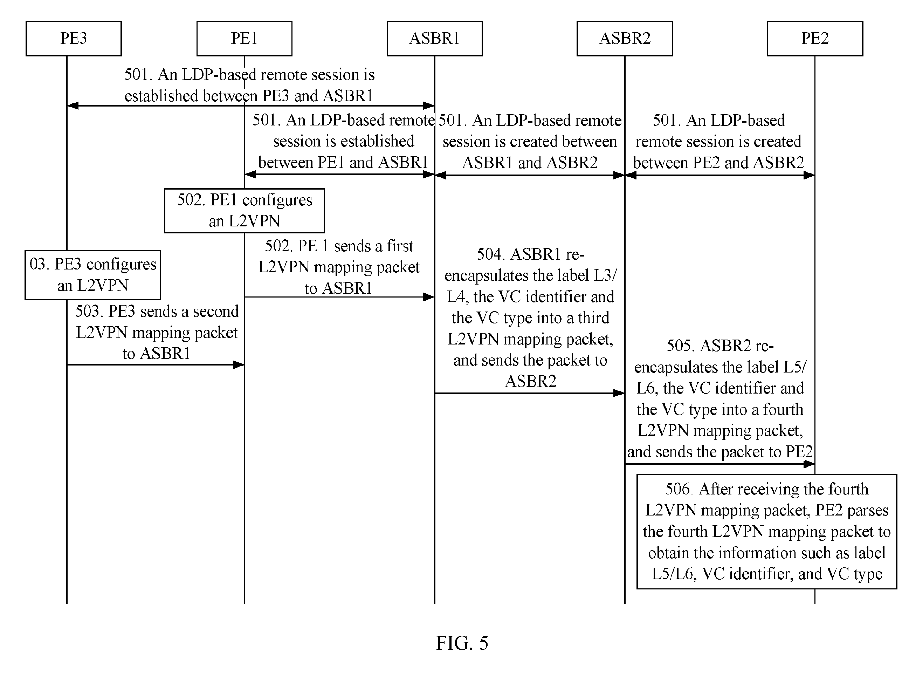

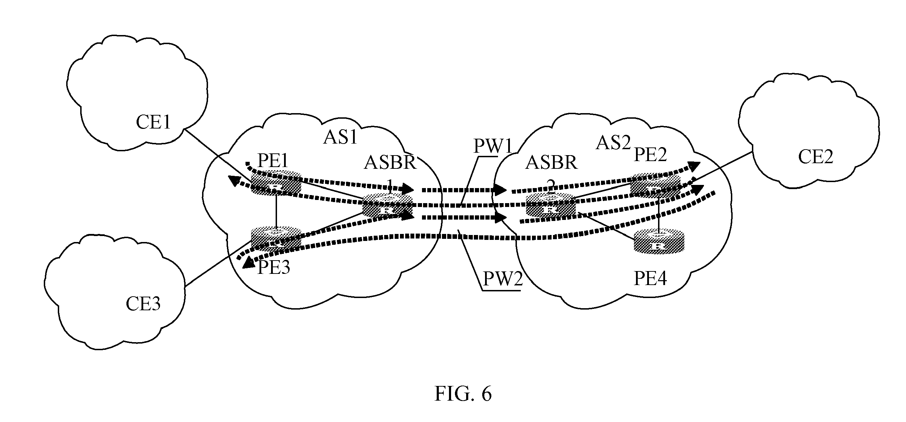

FIG. 5 is a signaling flowchart of a method for implementing L2VPN between ASs in the second embodiment of the present invention. The second embodiment deals with the method for establishing MPLS L2VPN between ASs in a point-to-multipoint VPN scenario. FIG. 6 shows a networking structure of the second embodiment of the present invention. As shown in FIG. 6, CE1, CE2 and CE3 belong to the same VPN; CE1 and CE3 access AS1; CE2 accesses AS2; and an MPLS L2VPN is established between AS1 and AS2. The establishing process includes the following steps:
501. An LDP remote session is established between PE1 and PE3, an LDP remote session is established between ASBR1 and ASBR2, and an LDP remote session is established between ASBR2 and PE2.
502. After configuring the L2VPN, PE1 sends a first L2VPN mapping packet to ASBR1. The first L2VPN mapping packet carries the information such as VC identifier, VC type, and label L1.
503. After configuring the L2VPN, PE3 sends a second L2VPN mapping packet to ASBR1. The second L2VPN mapping packet carries the information such as VC identifier, VC type, and label L2. Because PE1 and PE3 belong to the same VPN, the VC identifier and the VC type of PE3 are identical with the VC identifier and the VC type of PE1, but the label of PE3 may be different from the label of PE1.
504. After receiving the first L2VPN mapping packet and the second L2VPN mapping packet, ASBR1 parses the packet to obtain labels L1 and L2, obtains the IP address of PE1 and PE3 according to the remote session, searches out the public network LSP, applies for a new label L3 (corresponding to the VPN from PE1) and a new label L4 (corresponding to the VPN from PE3), and generates MPLS forwarding entries to PE1 and PE3 respectively, by using label L3/L4 as an ingress label and, using label L1/L2 and the public network LSP as an egress label, and at the same time, re-encapsulates the information such as L3/L4, VC identifier and VC type into a third L2VPN mapping packet which is then sent to ASBR2.
505. After receiving the third L2VPN mapping packet, ASBR2 parses the third L2VPN mapping packet to obtain label L3/L4, applies for a new label L5/L6, and generates MPLS forwarding entries by using L5/L6 as an ingress label and using L3/L4 as an egress label, and at the same time, re-encapsulates the information such as label L5/L6, VC identifier and VC type into a fourth L2VPN mapping packet which is then sent to PE2. If a remote session is already established between ASBR2 and other PEs in the AS, it is necessary to send the fourth L2VPN mapping packet to such PEs.
506. After receiving the fourth L2VPN mapping packet, PE2 parses the fourth L2VPN mapping packet to obtain the information such as label L5/L6, VC identifier, and VC type. Afterward, according to the VC identifier and VC type, PE2 judges whether an identical VC identifier and an identical VC type exist in PE2. If an identical VC identifier and an identical VC type exist in PE2, PE2 obtains the IP address of ASBR2 according to the remote session, searches out the public network LSP according to the IP address of ASBR2, and generates MPLS forwarding entries through MAC learning. The MPLS forwarding entries use the destination MAC address as an index and use the label L5/L6 and the public network LSP as an egress label.

In this way, a PW is established between PE2 and PE1/PE3 successfully. PE2 transmits the traffic of CE2 to PE1 or PE3 transparently through the PW which is selected according to whether the destination MAC address is CE1 or CE3. More specifically, the traffic from CE2 to PE1 is transmitted through the PW corresponding to L5, and the traffic from CE2 to CE3 is transmitted through the PW corresponding to L6. Afterward, PE1 sends the traffic to CE1, or PE3 sends the traffic to CE3.

In the reverse direction, the PW between PE1/PE3 and PE2 is established in the same way.

Through the foregoing method for implementing L2VPN between ASs, when multiple VPN users need to establish MPLS L2VPN between ASs, the MPLS L2VPN can be established between ASs through the technical solution under the present invention only if one link exists between the ASs, without the need of learning the route in other ASs or setting up a tunnel according to the route in other ASs. The extensibility bottleneck involved in the existing Option A that requires multiple links or multiple sub-interfaces is overcome. Moreover, the management is more convenient, and the security is higher, thus avoiding the security and management problems in Option C.

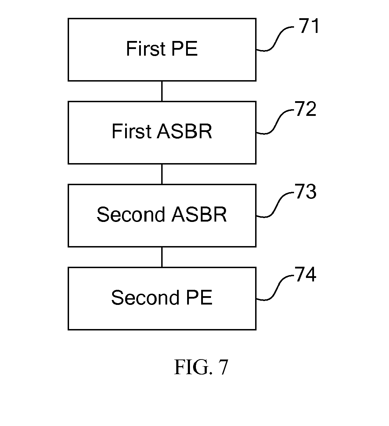

FIG. 7 shows a structure of a system for implementing L2VPN between ASs in an embodiment of the present invention. The system includes:
a first PE 71, adapted to send a first L2VPN mapping packet;
a first ASBR 72, adapted to receive and parse the first L2VPN mapping packet sent by the first PE 71, obtain the first label carried in the first L2VPN mapping packet, apply for a second label which is different from the first label carried in the first L2VPN mapping packet, generate a second L2VPN mapping packet according to the second label, send the second L2VPN mapping packet, and record label switching information, where the first PE 71 and the first ASBR 72 belong to the same AS;
a second ASBR 73, adapted to receive and parse the second L2VPN mapping packet sent by the first ASBR 72, obtain the second label carried in the second L2VPN mapping packet, apply for a third label which is different from the second label carried in the second L2VPN mapping packet, generate a third L2VPN mapping packet according to the third label, send the third L2VPN mapping packet, and record the label switching information; and
a second PE 74, adapted to receive and parse the third L2VPN mapping packet sent by the second ASBR 73, obtain the label, a VC identifier, and a VC type carried in the third L2VPN mapping packet, and establish an L2VPN according to the third label, VC identifier and VC type carried in the third L2VPN mapping packet.

Through the foregoing system for implementing L2VPN between ASs, the first PE 71 sends the first L2VPN mapping packet to the first ASBR 72, the first ASBR 72 belongs to the same AS which the first PE 71 is located in. After receiving the first L2VPN mapping packet sent by the first PE 71, the first ASBR 72 parses the first L2VPN mapping packet to obtain the first label carried in the first L2VPN mapping packet, applies for a second label which is different from the first label carried in the first L2VPN mapping packet, generates a second L2VPN mapping packet according to the second label, sends the second L2VPN mapping packet to the second ASBR 73, and records label switching information. The details of recording the label switching information may be: using the second label as an ingress label and using the first label carried in the first L2VPN mapping packet and the public network LSP as an egress label to generate MPLS forwarding entries.

After receiving the second L2VPN mapping packet sent by the first ASBR 72, the second ASBR 73 parses the second L2VPN mapping packet to obtain the second label carried in the second L2VPN mapping packet, applies for a third label which is different from the second label carried in the second L2VPN mapping packet, generates a third L2VPN mapping packet according to the third label, sends the third L2VPN mapping packet to the second PE 74 which is in a remote session with the second ASBR 73, and records the label switching information. In this case, the details of recording the label switching information may be: using the third label as an ingress label and using the second label carried in the second L2VPN mapping packet as an egress label to generate MPLS forwarding entries.

After receiving the third L2VPN mapping packet sent by the second ASBR 73, the second PE 74 parses the third L2VPN mapping packet to obtain the third label, the VC identifier and the VC type carried in the third L2VPN mapping packet, and establishes an L2VPN according to the third label, the VC identifier and the VC type carried in the third L2VPN mapping packet.

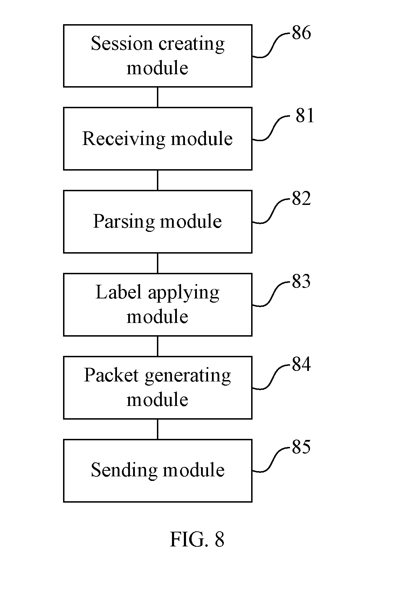

FIG. 8 shows a structure of an ASBR in an embodiment of the present invention. The ASBR includes:
a receiving module 81, adapted to receive a first L2VPN mapping packet;
a parsing module 82, adapted to parse the first L2VPN mapping packet received by the receiving module 81, and obtain the first label carried in the first L2VPN mapping packet;
a label applying module 83, adapted to apply for a second label which is different from the first label obtained by the parsing module 82;
a packet generating module 84, adapted to generate a second L2VPN mapping packet according to the second label applied for by the label applying module 83; and
a sending module 85, adapted to send the second L2VPN mapping packet generated by the packet generating module 84, and record label switching information.

After the receiving module 81 receives the first L2VPN mapping packet sent by the PE in the AS that covers the ASBR, the sending module 85 sends the generated second L2VPN mapping packet to a second ASBR. In this case, after the label switching information is recorded, the ASBR uses the second label applied for by the label applying module 83 as an ingress label and uses the first label carried in the first L2VPN mapping packet received by the receiving module 81 and the public network LSP as an egress label to generate MPLS forwarding entries.

Alternatively, after the receiving module 81 receives the first L2VPN mapping packet sent by the second ASBR, the sending module 85 sends the generated second L2VPN mapping packet to the PE which is in a remote session with the ASBR. In this case, after the label switching information is recorded, the ASBR uses the second label applied for by the label applying module 83 as an ingress label and uses the first label carried in the first L2VPN mapping packet received by the receiving module 81 as an egress label to generate MPLS forwarding entries.

The ASBR may further include a session establishing module 86, adapted to establish an LDP remote session with a second ASBR and establish an LDP remote session with a PE in the AS that covers the ASBR. In this way, the ASBR can receive the first L2VPN mapping packet sent by the PE in the AS that covers the ASBR, and can receive the first L2VPN mapping packet sent by the second ASBR.

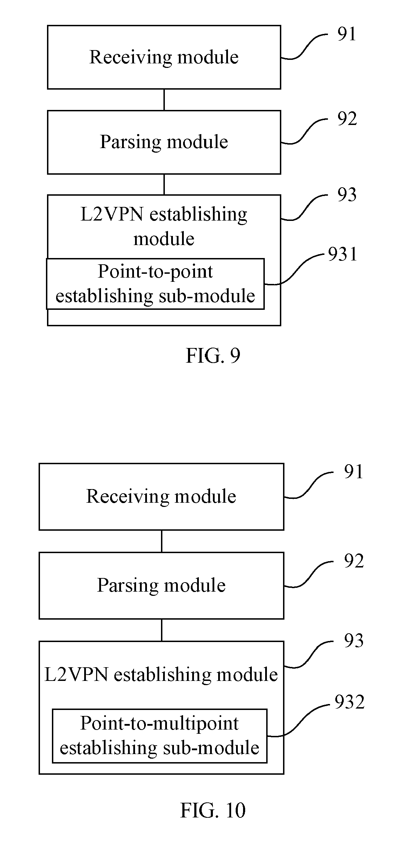

FIG. 9 shows a structure of a PE in an embodiment of the present invention. The PE includes:
a receiving module 91, adapted to receive an L2VPN mapping packet sent by an ASBR;
a parsing module 92, adapted to parse the L2VPN mapping packet received by the receiving module 91, and obtain the label, a VC identifier, and a VC type carried in the L2VPN mapping packet; and
an L2VPN establishing module 93, adapted to establish an L2VPN according to the label, VC identifier and VC type carried in the L2VPN mapping packet obtained by the parsing module 92.

The L2VPN establishing module 93 may include a point-to-point establishing sub-module 931, adapted to: in a point-to-point VPN scenario, after the PE determines that an identical VC identifier and VC type exist in the PE according to the VC identifier and VC type, obtain the IP address of the ASBR according to the remote session between the PE and the ASBR, search for the public network LSP according to the IP address of the ASBR, and generate MPLS forwarding entries, where the MPLS forwarding entries use the ingress label of the VPN user corresponding to the VC identifier and VC type as an index and use the label carried in the L2VPN mapping packet and the public network LSP as an egress label.

As shown in FIG. 10, the L2VPN establishing module 93 in another embodiment of the present invention includes: a point-to-multipoint establishing sub-module 932, adapted to: in a point-to-multipoint VPN scenario, after the PE determines that an identical VC identifier and an identical VC type exist in the PE according to the VC identifier and the VC type, obtain the IP address of the ASBR according to the remote session between the PE and the ASBR, search for the public network LSP according to the IP address of the ASBR, and generate MPLS forwarding entries with the MAC address, where the MPLS forwarding entries use the destination MAC address as an index and use the label carried in the L2VPN mapping packet and the public network LSP as an egress label.

After reading the foregoing embodiments, those skilled in the art are clearly aware that the present invention may be implemented through hardware, or through software in addition to a necessary universal hardware platform. Therefore, the technical solution under the present invention may be embodied as a software product. The software product may be stored in a non-volatile storage medium (such as a CD-ROM, a USB disk, or a mobile hard disk), and may include several instructions that enable a computer device (such as a personal computer, a server, or a network device) to perform the methods provided in the embodiments of the present invention.

The above descriptions are merely exemplary embodiments of the present invention and not intended to limit the scope of the present invention. Any modification, equivalent replacement, or improvement made without departing from the spirit and principle of the present invention should fall within the scope of the present invention.

## Claims

1. A method for implementing a Layer-2 Virtual Private Network, L2VPN, between Autonomous Systems, ASs, comprising:
receiving a first L2VPN mapping packet from a first AS;
parsing the first L2VPN mapping packet to obtain a first label carried in the first L2VPN mapping packet, applying for a second label which is different from the first label carried in the first L2VPN mapping packet, and generating a second L2VPN mapping packet according to the second label; and
sending the second L2VPN mapping packet to a second ASautonomous system.

2. The method of claim 1, wherein before receiving the first L2VPN mapping packet, the method further comprises:
establishing, by an Autonomous System Boundary Router, ASBR, a Label Distribution Protocol, LDP,- remote session with a second ASBR, and establishing an LDP remote session with a Provider Edge, PE, in the AS which the ASBR is located in.

3. The method of claim 1, wherein:
the receiving of the first L2VPN mapping packet from the first AS comprises:
receiving the first L2VPN mapping packet sent by a Provider Edge, PE, in the first AS which an Autonomous System Boundary Router, ASBR, is located in; and
accordingly, the sending of the second L2VPN mapping packet to the second AS comprises:
sending the second L2VPN mapping packet to a second ASBR, wherein the second ASBR belongs to the second AS.

4. The method of claim 3, further comprising:
recording label switching information; and
generating Multi-Protocol Label Switching, MPLS, forwarding entries by taking the second label as an ingress label and taking the first label and a public network Label Switching Path, LSP, as an egress label.

5. The method of claim 1, wherein:
the receiving of the first L2VPN mapping packet comprises:
receiving, by an Autonomous System Boundary Router, ASBR, the first L2VPN mapping packet sent by a second ASBR; and
accordingly, the sending of the generated second L2VPN mapping packet comprises:
sending the generated second L2VPN mapping packet to a Provider Edge, PE, which is in a remote session with the ASBR; parsing, by the PE, the second L2VPN mapping packet to obtain the second label, a Virtual Circuit, VC, identifier and a VC type carried in the second L2VPN mapping packet; and building an L2VPN according to the second label, the VC identifier and the VC type carried in the second L2VPN mapping packet.

6. The method of claim 5, further comprising:
recording label switching information; and
taking the second label as an ingress label and taking the first label carried in the first L2VPN mapping packet as an egress label to generate Multi-Protocol Label Switching, MPLS, forwarding entries.

7. A system for implementing a Layer-2 Virtual Private Network, L2VPN, between Autonomous Systems, ASs, comprising:
a first Provider Edge, PE, adapted to send a first L2VPN mapping packet;
a first Autonomous System Boundary Router, ASBR, adapted to receive and parse the first L2VPN mapping packet sent by the first PE, obtain a label carried in the first L2VPN mapping packet, apply for a second label which is different from the first label carried in the first L2VPN mapping packet, generate a second L2VPN mapping packet according to the second label, and send the second L2VPN mapping packet, wherein the first PE and the first ASBR belong to a first AS;
a second ASBR, adapted to receive and parse the second L2VPN mapping packet sent by the first ASBR, obtain the second label carried in the second L2VPN mapping packet, apply for a third label which is different from the second label carried in the second L2VPN mapping packet, generate a third L2VPN mapping packet according to the third label, and send the third L2VPN mapping packet, wherein the second ASBR belongs to a second AS; and
a second PE, adapted to receive and parse the third L2VPN mapping packet sent by the second ASBR, obtain the third label, a Virtual Circuit, VC, identifier and a VC type carried in the third L2VPN mapping packet, and build an L2VPN according to the third label, the VC identifier and the VC type carried in the third L2VPN mapping packet, wherein the second PE and the second ASBR belong to the second AS.

8. An Autonomous System Boundary Router, ASBR, comprising:
a receiving module, adapted to receive a first Layer-2 Virtual Private Network, L2VPN, mapping packet;
a parsing module, adapted to parse the first L2VPN mapping packet received by the receiving module, and obtain a first label carried in the mapping packet;
a label applying module, adapted to apply for a second label which is different from the first label obtained by the parsing module;
a packet generating module, adapted to generate a second L2VPN mapping packet according to the second label applied for by the label applying module; and
a sending module, adapted to send the second L2VPN mapping packet generated by the packet generating module.

9. The ASBR of claim 8, further comprising:
a session establishing module, adapted to establish a Label Distribution Protocol, LDP, remote session with a second ASBR, and establish an LDP remote session with a Provider Edge, PE, in an Autonomous System, AS, which the ASBR is located in.

10. A Provider Edge, PE, comprising:
a receiving module, adapted to receive a Layer-2 Virtual Private Network, L2VPN, mapping packet sent by an Autonomous System Boundary Router, ASBR;
a parsing module, adapted to parse the L2VPN mapping packet received by the receiving module, and obtain a label, a Virtual Circuit, VC, identifier and a VC type carried in the L2VPN mapping packet; and
an L2VPN establishing module, adapted to establish an L2VPN according to the label, VC identifier and VC type carried in the L2VPN mapping packet obtained by the parsing module.

11. The PE of claim 10, for a point-to-point Virtual Private Network, VPN, scenario, wherein the L2VPN establishing module comprises:
a point-to-point establishing sub-module, adapted to, after the PE determines that an identical VC identifier and an identical VC type exist in the PE, obtain an Internet Protocol, IP, address of the ASBR according to a remote session between the PE and the ASBR, search for a public network Label Switching Path, LSP, according to the IP address of the ASBR, and create Multi-Protocol Label Switching, MPLS, forwarding entries, wherein the MPLS forwarding entries take an ingress label of a VPN user corresponding to the VC identifier and the VC type as an index and take the label carried in the L2VPN mapping packet and the public network LSP as an egress label.

12. The PE of claim 10, for a point-to-multipoint Virtual Private Network, VPN, scenario, wherein the L2VPN establishing module comprises:
a point-to-multipoint establishing sub-module, adapted to, after the PE determines that an identical VC identifier and an identical VC type exist in the PE, obtain an Internet Protocol, IP, address of the ASBR according to a remote session between the PE and the ASBR, search for a public network Label Switching Path, LSP, according to the IP address of the ASBR, and create Multi-Protocol Label Switching, MPLS, forwarding entries with a Media Access Control, MAC, address, wherein the MPLS forwarding entries take a destination MAC address as an index and take the label carried in the L2VPN mapping packet and the public network LSP as an egress label.
